# EUROPEAN PATENT APPLICATION

(11) **EP 2 843 367 A1**
(43) Date of publication of application: **04.03.2015**
(21) Application number: 14179960.1
(22) Date of filing: 06.08.2014
(51) Int. Cl.: G01C 21/36, G01C 21/32

(54) **A navigation device to add a Point-Of-Interest (POI) into a POI list**

(30) Priority: 28.08.2013 IN CH38072013
(71) Applicant: ROBERT BOSCH GMBH, 70442 Stuttgart (DE); Robert Bosch Engineering And Business Solutions Limited, Bangalore 560 095 State of Karnataka (IN)
(72) Inventor: Tripathi, Pranava, 560061 Chikkalsandra, Bangalore (IN); Arunkumar, Sreeja, 635109 Onnalvadi, Karappalli, Hosur, TamilNadu (IN)

(57) **Abstract**

A navigation device to add a point-of-Interest (POI) into a POI list (35) of the navigation device (100) is disclosed. The navigation device comprises, a POI determination means (10), to determine a category of the POI depending on an electronic transaction (201) conducted by an user (1000) of the navigation device (100) at the POI, a location calculation means (20), to calculate a geographical location of the POI depending on the determined category of the POI and an adding means (30), to add the POI along with the category of the POI and the geographical location of the POI into the POI list (35) of the navigation device (100). Further a method to add a POI into a POI list of the navigation device is also disclosed.

## Description

The following specification describes and ascertains the nature of this invention and the manner in which it is to be performed:

### Field of the invention

The current invention relates to a device and a method to add a point-of-interest (POI) into a POI list in a navigation device.

### Background of the invention

Navigation devices are well known in current technology that they help a user to traverse from an origin to a destination location. Navigation devices are available in vehicles, handheld mobiles or other handheld gadgets and they help the user in navigating from the origin to the destination by displaying the path between the two locations. Further, with the advancement in the technology, the navigation devices also display specific points along the path (POI - Point of Interest), between the origin location and the destination location, which might be of interest to the user. These POIs typically could be a hospital, or a fuel station or a shopping mall etc. The POIs pop up in a display unit of the navigation device, as and when the user traverses through the path from the origin location to the destination location.

In the real world, new POIs keep getting added as and when a new business establishment is created. The digital data of such POIs are not continuously updated in the navigation device. There is an option in the navigation device, wherein the user can add a new POI into the database of the navigation device manually. But this method is tedious since the user has to add all the details of the POI into the navigation device every time. The prior art, US patent 8457878, discloses a method for automatically creating points of interest by identifying geographic information on a screen of a portable navigation device.

### Description of the invention

The core of the current invention is a navigation device to add a point-of-interest (POI) into a POI list. The features of the independent claims of the current invention present the core of the current invention.

The navigation device of the current invention, comprises, a POI determination means, to determine a category of the POI added into said POI list, depending on an electronic transaction conducted by an user of the navigation device at the POI, a location calculation means, calculates a geographical location of the POI depending on the determined category of the POI and an adding means, adds the POI along with the category of the POI and the geographical location of the POI into the POI list of the navigation device.

In an aspect of the current invention the electronic transaction is at least one of a SMS or an email or an electronic notification received by the navigation device, immediately after the transaction is made by the user of the navigation device at the POI. The properties, category, name of the POI are advantageously determined by the POI determination means from the received electronic transaction conducted by the user at the POI location. The POI determination means extracts the category of the POI depending on the at least one of the SMS or the email received by the navigation device.

The location calculation means advantageously calculates the geographical location of the POI depending on GPS coordinates of the POI received from a GPS satellite or location information extracted from said electronic transaction. The electronic transaction received by the navigation device could also contain the location information which is advantageously extracted by the location calculation means. The location calculation means calculates the geographical location of the POI as soon as the POI category is determined.

Further, in another aspect of the current invention the adding means adds the POI into the POI list depending on the POI being not present in the POI list of the navigation device. Thus new, POI is advantageously added by the navigation device of the current invention without any manual intervention by the user.

In a further aspect a method to add a point-of-interest (POI) into a POI list (35) in a navigation device is also disclosed. The method comprises the steps, determining a category of the POI depending on an electronic transaction conducted by an user of the navigation device at the POI, calculating a geographical location of the POI depending on the determined category of the POI and adding the POI along with the determined category of the POI and the calculated geographical location of the POI into the POI list of the navigation device.

### Short description of the drawings

Advantageous embodiments and refinements of the invention are evident from the dependent claims. An exemplifying embodiment of the invention is explained in principle below with reference to the drawings. The drawings are,
Figure 1 shows a block diagram of a navigation device according to the aspects of the current invention.
Figure 2 shows a flowchart of the method of the current invention.

### Description of the Embodiments

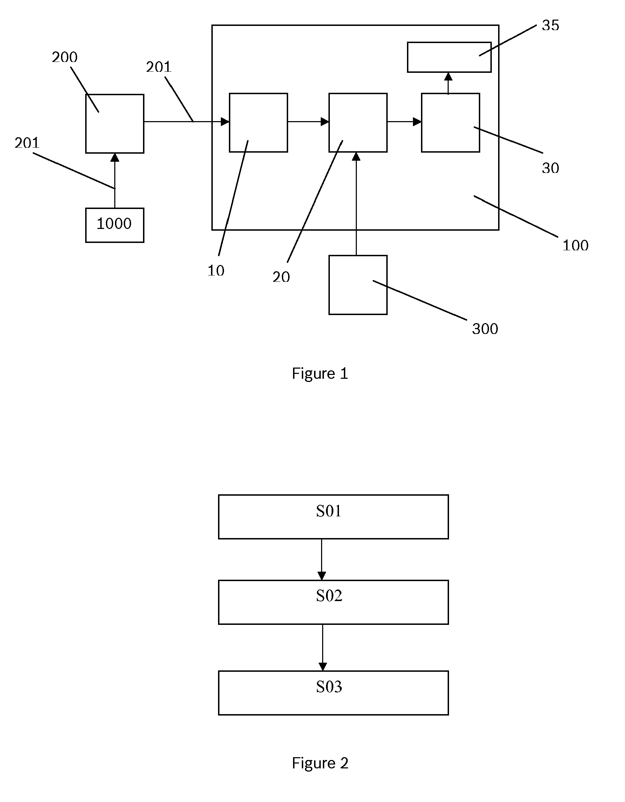

Figure 1 shows a block diagram representation of the navigation device 100 to add a Point-of-Interest (POI) into a POI list 35 of the navigation device 100. The navigation device 100 comprises a POI determination means 10 to determine a category of the POI depending on an electronic transaction 201 conducted by an user 1000 of the navigation device 100. The navigation device 100 further comprises a location calculation means to calculate a geographical location of the POI depending on the determined category of the POI and an adding means 30 to add the POI along with the category of the POI and the geographical location of the POI into the POI list 35 of the navigation device 100.

According to the aspects of the current invention, the navigation device 100 could be a handheld device or a mobile phone or an in-car navigation device which helps the user 1000 from travelling from a origin location to a destination location. The navigation device 100 of the current invention helps the user 1000 to automatically update the POI into the POI list 35 which is within the navigation device 100.

Typically, in the current age of technology, as soon as the electronic transaction 201 at the POI is done by the user 1000, an electronic notification corresponding to the transaction 201 and containing details like name of the POI, category of the POI etc is received by the user 1000 along with the details of the transaction 201. The electronic transaction 201 according to the aspect of the current invention is anything that involves an electronic device through which the transaction is conducted by communicating with a central electronic server. The electronic transaction 201 could be generation of a coupon at a supermarket or a contact with the central electronic server for download of data or any electronic financial transaction. This feature is advantageously used by the navigation device 100 of the current invention. The navigation device 100 being used by the user 1000 and having the mentioned features, immediately receives the electronic transaction 201. The electronic transaction 201 is at least one of a short message service (S MS) or an email or any other electronic notification received by the navigation device 100. The electronic transaction 201 can also be any similar electronic information to the navigation device 100 like MMS etc. In other technologies like NFC (Near Field Communication) which can be incorporated in the navigation device 100 of the current invention, the navigation device 100 is used to download a song for example from a kiosk POI. The navigation device 100 can then receive the electronic notification or the SMS or the email from a central server 200, processing the electronic transaction conducted by the user 1000 at the POI. The central server 200, for example, sends the SMS or the email to the navigation device 100 as soon as the electronic transaction 201 is completed by the user 1000. The SMS or email is a text messaging service component of phone, web, or mobile systems using standardized communications protocols that allow the exchange of short text messages between fixed line or mobile phone devices. The SMS or the email typically may contain text for example, "50$ debited from account at ABC Restaurant" or "150$ withdrawn at XYZ Bank ATM". The POI determination means 10 of the navigation device 100 receives the S MS or the email and determines the category of the POI depending on the text in the SMS or the email.

The POI determination means 10 could determine the category of the POI using text recognition techniques or could also determine the category depending on POI dependent codes embedded in the SMS or the email. The POI determination means 10 effectively determines the name of the POI, or the type of the POI or any other such parameters of the POI from the SMS or the email.

In another aspect of the current invention, once the POI category is determined by the POI determination means 10, the location calculation means 20 immediately calculates the geographical location of the POI. The location calculation means 20 calculates the geographical location of the POI depending on GPS coordinates of the POI received from a GPS satellite 300. The GPS satellite 300 provides the exact location the navigation device 100 through a GPS communication established between the GPS satellite 300 and the navigation device 100. This location, calculated by the location calculation means 20 corresponds to the location of the POI where the electronic transaction 201 was conducted by the user 1000 of the navigation device 100. In another embodiment, the location calculation means 20 calculates the location of the POI depending on the location information embedded in the electronic transaction 201 received by the navigation device 100. The location calculation means 20 could also employ other known technologies of locating the geographical location like GPRS technology or the like.

Further the adding means 30 adds the POI along with the determined category of the POI and the calculated geographical location of the POI into the POI list 35. The adding means 30 adds the POI into the POI list 35 only if the POI is not already present in the POI list 35. The adding means 30 compares the POI in the entries of the POI list 35 and then updates the POI list 35. Thus the navigation device 100 of the current invention can automatically update the POI into the POI list 35 without any manual intervention from the user 1000 of the navigation device 100.

It must be understood that the POI determination means 10, the location calculation means 20, the adding means 30 and the POI list 35 can all be implemented in a software program running in a microcontroller of the navigation device 100. The aforementioned elements of the navigation device 100 could also be implemented as different or as one single hardware element within the navigation device 100. Further, the navigation device 100 could update the newly identified POI along with the category of the POI and the geographical location of the POI into a central server for example a cloud, which could be later used for updating the map of the navigation device 100.

In another aspect of the current invention a method to add a point-of-interest (POI) into a POI list 35 in a navigation device 100 is disclosed. The method in a step S01, determines a category of the POI, depending on an electronic transaction 201 conducted by an user 1000 of the navigation device 100 at the POI. In step S02, a geographical location of the POI depending on the determined category of the POI is calculated. Finally, in step S03, the POI along with the determined category of the POI and the calculated geographical location of the POI is added into the POI list 35 of the navigation device 100.

The method of the current invention could advantageously be executed in a microcontroller of the navigation device 100 of the current invention. The method could be stored in a memory unit of the navigation device 100 and executed by the microcontroller.

It must be understood that the embodiments explained in the above detailed description is only illustrative and does not limit the scope of this invention. The scope of this invention is limited only by the scope of the claims. Many modification and changes in the embodiments aforementioned are envisaged and are within the scope of this invention.

## Claims

1. A Navigation device (100) to add a point-of-Interest (POI) into a POI list (35) of said navigation device (100), comprising,
- A POI determination means (10), to determine a category of said POI depending on an electronic transaction (201) conducted by an user (1000) of said navigation device (100) at said POI,
- a location calculation means (20), to calculate a geographical location of said POI depending on said determined category of said POI,
- an adding means (30), to add said POI along with said category of said POI and said geographical location of said POI into said POI list (35) of said navigation device (100).

2. The navigation device (100) as claimed in claim 1, wherein said electronic transaction is at least one of a SMS or an email or any electronic notification received by said navigation device (100).

3. The navigation device (100) as claimed in claim 2, wherein said POI determination means (10) extracts said category of said POI depending on said at least one of said S MS or said email received by said navigation device.

4. The navigation device (100) as claimed in claim 1, wherein said location calculation means (20) calculates said geographical location of said POI depending on GPS coordinates of said POI received from a GPS satellite or a location information extracted from said electronic transaction (201).

5. The navigation device (100) as claimed in claim 1, wherein said adding means (30) adds said POI into said POI list depending on said POI being not present in said POI list.

6. A method to add a point-of-interest (POI) into a POI list (35) in a navigation device (100), comprising the steps,
- Determining (S01) a category of said POI depending on an electronic transaction (201) conducted by an user (1000) of said navigation device (100) at said POI,
- Calculating (S02) a geographical location of said POI depending on said determined category of said POI and
- Adding (S03) said POI along with said determined category of said POI and said calculated geographical location of said POI into said POI list of said navigation device (100).
